# EUROPEAN PATENT APPLICATION

(11) **EP 4 549 258 A1**
(43) Date of publication of application: **07.05.2025**
(21) Application number: 23306916.0
(22) Date of filing: 06.11.2023
(51) Int. Cl.: B60R 25/022

(54) **IMPROVEMENTS RELATING TO TRAPPED KEY INTERLOCK SYSTEMS**

(71) Applicant: Serv Trayvou Interverrouillage, 93106 Montreuil Cedex (FR)
(72) Inventor: COELHO, José, 75011 Paris (FR); KOUPPE de K/MARTIN, Romain, 94600 Choisy le roi (FR); SHEETS, Derek, 44708 Canton, Ohio (US)
(74) Representative: Boult Wade Tennant LLP

(57) **Abstract**

A steering wheel lock (1) movable between a dismounted state, in which the steering wheel lock (1) is separated from a steering wheel (200), and a mounted state, in which the steering wheel lock (1) is locked onto a steering wheel (200).

The steering wheel lock (1) comprising a body (2) defining a cavity (3) for receiving a rim (201) of a steering wheel (200), a locking mechanism, and a key (5).

The locking mechanism configured such that in the dismounted state the key (5) is trapped in the locking mechanism so as to remain connected to the steering wheel lock (1) while the steering wheel lock (1) is not mounted to a steering wheel (200), and in the mounted state the key (5) is separable from the locking mechanism and the steering wheel lock (1).

The locking mechanism further comprising a locking member (10) movable between an unlocked position in which the locking member (10) is retracted out of the cavity (3) sufficiently to allow introduction of a rim (201) of a steering wheel (200) into the cavity, and a locked position in which the locking member (10) projects across the cavity (3) sufficiently to prevent withdrawal of said rim (201) of said steering wheel (200) out of the cavity (3).

## Description

### Field of the disclosure

The present disclosure relates to the field of trapped key interlock systems. In particular, it relates to a steering wheel lock suitable for use as part of a trapped key interlock system and a method of preventing a vehicle from being driven away, for example from a loading bay during loading/unloading.

### Background

Trapped key interlock systems may be used to ensure that a sequence of events occurs in a safe and predetermined order. For example, a trapped key interlock system may comprise a mechanism that requires that a mechanical key be locked or trapped in a device until some action occurs, after which the trapped key is allowed to be released and removed for subsequent use.

GB2402452 describes a vehicle including a coupling assembly for connecting first and second sections of a brake supply line, the coupling assembly comprising complementary first and second couplings which fit together. A safety device is complementary to one coupling and which can be fitted to the coupling so that it cannot be connected to the other coupling. The safety device includes a locking device which is operable to prevent removal of the safety device from the coupling; the locking device prevents removal of a key until the locking device is operated. The key removed from the locking device can be used to enable use of a loading bay. The safety device of GB2402452 is fitted to a part of the brake coupling of a trailer unit ensuring that the brakes of the trailer unit are on before the key of the safety device can be removed in order to operate a dock leveller of the loading bay. While the safety device of GB2402452 is effective it is limited to use with vehicles having detachable brake couplings, e.g. vehicles with trailer units. It is also limited to use only in situations where it is intended that the brake coupling is decoupled.

It would therefore be beneficial to provide an improved device, or at least a commercially acceptable alternative thereto, that does not suffer from these limitations.

### Summary of the disclosure

Against this background, in a first aspect there is provided a steering wheel lock movable between a dismounted state, in which the steering wheel lock is separated from a steering wheel, and a mounted state, in which the steering wheel lock is locked onto a steering wheel;
the steering wheel lock comprising a body defining a cavity for receiving a rim of a steering wheel, a locking mechanism, and a key;
the locking mechanism configured such that in the dismounted state the key is trapped in the locking mechanism so as to remain connected to the steering wheel lock while the steering wheel lock is not mounted to a steering wheel, and in the mounted state the key is separable from the locking mechanism and the steering wheel lock;
the locking mechanism further comprising a locking member movable between:
   i) an unlocked position in which the locking member is retracted out of the cavity sufficiently to allow introduction of a rim of a steering wheel into the cavity; and
   ii) a locked position in which the locking member projects across the cavity sufficiently to prevent withdrawal of said rim of said steering wheel out of the cavity.

Advantageously, the steering wheel lock may act as a deterrent to prevent unintended drive away situations. Further, the steering wheel lock is visible directly in the driver cab of the vehicle so provides a warning at the point/location where the driver may start the vehicle and even before the vehicle is started. The steering wheel lock may be used with a wide variety of vehicles including rigid body vehicles and articulated vehicles and, in particular, may not require any specific adaption for a specific vehicle model. The steering wheel lock may be particularly easy to install without requiring any specialised training or tools. Beneficially, the steering wheel lock may be fully compatible with existing trapped key interlock systems.

The steering wheel lock may be configured to be mounted onto a rim of a steering wheel by sliding the steering wheel lock down onto said rim. Beneficially, this may improve the ergonomics and ease of use of the steering wheel lock.

The cavity may comprise an open mouth defined by the body through which a rim of a steering wheel can pass during slidable mounting and dismounting of the steering wheel lock.

The body may comprise a first wall, a second wall and a roof joining the first wall to the second wall. The cavity may be defined between the first wall and the second wall with the open mouth being arranged opposite the roof.

The locking member may be configured to be movable axially and rotationally, axial movement moving the locking member between the locked position and the unlocked position.

The locking mechanism may further comprise one or more detents that are configured to be movable between:
an engaged position in which the one or more detents engage the locking member to prevent axial and/or rotational movement of the locking member; and
a disengaged position in which the one or more detents are disengaged from the locking member to permit axial and rotational movement of the locking member.

The locking member may comprise a boss comprising one or more recesses for receiving the one or more detents.

The locking mechanism may further comprise one or more triggers that are coupled to or integrally formed with the one or more detents, the one or more triggers in a rest state projecting into the cavity in the dismounted state of the steering wheel lock when the one or more detents are in their engaged position. The one or more triggers may be configured to be contacted by a rim of a steering wheel on movement of the steering wheel lock into the mounted state so as to displace the triggers into a triggered state thereby causing the one or more detents to be moved into their disengaged position.

The locking mechanism may comprise a plurality of triggers and a plurality of detents and the locking mechanism is configured such that all of the triggers must be displaced into their triggered state in order to move all of the detents into their disengaged position to permit axial and rotational movement of the locking member.

Advantageously, the use of a plurality of triggers and a plurality of detents may made defeating the steering wheel lock harder to achieve since actuating the locking mechanism with an unintended object (i.e. not a steering wheel) is made more difficult.

The one or more triggers may be located at or towards a roof of the cavity opposite the mouth of the cavity.

In the mounted state a rim of a steering wheel may be sandwiched between the one or more triggers and the locking member. Beneficially this may prevent removal of the steering wheel lock from the rim.

The steering wheel lock may comprise two triggers, optionally three or more triggers. The triggers may be arranged along the roof of the cavity.

Contact points of the triggers that in use are contacted by a rim of a steering wheel may be arranged along an arc, optionally along a circular path.

Advantageously, arranging the contact points along an arc, optionally along a circular path, may allow the steering wheel lock to be adapted to use with a steering wheel any may help to prevent defeat of the steering wheel lock by use of a straight bar, tool or other object since this would not be able to simultaneously actuate all triggers.

Contact points of the triggers that in use are contacted by a rim of a steering wheel may be arranged in one plane that is parallel to a plane of the cavity, or may be arranged in more than one plane that are each parallel to a plane of the cavity.

Advantageously, arranging the contact points on more than one plane can help to prevent defeat of the steering wheel lock by use of a thin bar or object. Instead, the steering wheel lock may be configured to require insertion of an object having substantially the width of a steering wheel to actuate simultaneously all of the triggers.

The one or more triggers may each be biased into their rest state so that the one or more detents are biased into their engaged position.

The locking mechanism may comprise one or more slidable members, each slidable member comprising one of the triggers at one end and one of the detents at a second end.

Each slidable member may comprise an elongate body housed within the body and a lateral leg forming the trigger that can project through an aperture in the body.

The locking mechanism may be configured such that removal of the key from the locking mechanism requires rotation of the locking member, which in turn requires the locking member to be in its locked position, which in turn requires the one or more detents to be in their disengaged position, which in turn requires the one or more triggers to have been engaged by a rim of a steering wheel, which in turn requires the steering wheel lock to be in its mounted state.

The locking mechanism may be configured such that rotational movement of the locking member requires the key to be inserted in the locking mechanism.

The locking mechanism may comprise a key barrel configured to receive the key, the key barrel being coupled to the locking member.

The steering wheel lock may further comprise a visual indicator for alerting a user when the steering wheel lock is in its mounted state. The visual indicator may comprise a window in the body and one or more visible indications on one of the slidable members that can be selectively viewed through the window.

In another aspect there is provided a trapped key system comprising:
the steering wheel lock as described in the first aspect; and
an enabling device for selectively enabling and disabling use of a loading bay, the enabling device being operable by the key of the steering wheel lock.

The enabling device may prevent removal of the key from the enabling device until the enabling device is operated to disable use of the loading bay. The enabling device may comprise an electrical switch and/or a door lock.

In another aspect there is provided a method of preventing a vehicle from being driven away from a loading bay during loading/unloading, comprising the sequential steps of:
applying to a steering wheel of a vehicle at a loading bay a steering wheel lock as described in the first aspect which prevents the vehicle from being driven away from the loading bay,
locking the steering wheel lock to prevent removal of the steering wheel lock, by means of the key which is prevented from being removed from the steering wheel lock until the steering wheel lock is applied and locked to a rim of the steering wheel;
removing the key from the locked steering wheel lock; and
using the key in an enabling device to enable use of the loading bay and simultaneously trapping the key in the enabling device so that it cannot be used to unlock the steering wheel lock until the key is used to disable use of the loading bay.

### Brief description of the drawings

The present disclosure will now be described, by way of example only, with reference to the accompanying drawings in which:
Figure 1 is perspective view of a steering wheel lock according to the present disclosure;
Figure 2 is a front view of the steering wheel lock of Figure 1;
Figure 3 is a side view of the steering wheel lock of Figure 1;
Figure 4 is a rear view of the steering wheel lock of Figure 1;
Figure 5 is a top view of the steering wheel lock of Figure 1;
Figure 6 is a bottom view of the steering wheel lock of Figure 1;
Figure 7 is a perspective view of a chassis core of the steering wheel lock of Figure 1;
Figure 8 is a front view of the chassis core of Figure 7;
Figure 9 is a perspective view of a rear plate of the steering wheel lock of Figure 1;
Figure 10 is a perspective view of a front plate of the steering wheel lock of Figure 1;
Figure 11 is a perspective view of a rear of a boss of the steering wheel lock of Figure 1;
Figure 12 is a perspective view of a front of the boss of Figure 11;
Figure 13 is an exploded perspective view of the boss of Figure 11 with a central shaft;
Figure 14 is an exploded perspective view of the boss and the central shaft with a head piece;
Figure 15 is a perspective view showing the boss, central shaft and head piece assembled;
Figure 16 is a perspective view of a front of a cylinder of the steering wheel lock of Figure 1;
Figure 17 is a perspective view of a rear of the cylinder of Figure 16;
Figure 18 is a perspective view of the head piece;
Figure 19 is a perspective view of a key of the steering wheel lock of Figure 1;
Figure 20 is a perspective view showing a portion of a locking mechanism of the steering wheel lock of Figure 1 in a first state;
Figure 21 is a front view showing another portion of the locking mechanism in the first state;
Figure 22 is a rear view of the portion of the locking mechanism of Figure 20;
Figure 23 is a cross-sectional view of the locking mechanism in the first state;
Figure 24 is an exploded perspective view of components of the locking mechanism;
Figure 25 shows the steering wheel lock of Figure 1 mounted on a steering wheel;
Figure 26 is a rear view of portions of the locking mechanism in a second state after engagement by a rim of the steering wheel;
Figure 27 is a perspective view showing a hollow member and boss of the steering wheel lock of Figure 1;
Figure 28 is a cross-sectional view of the locking mechanism in the second state; and
Figure 29 is a schematic view showing steps a) to g) of mounting the steering wheel lock to a steering wheel.

### Detailed description

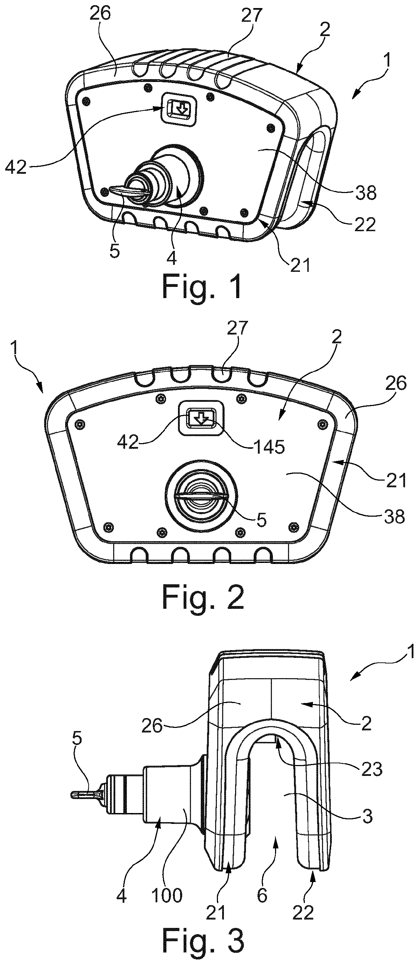

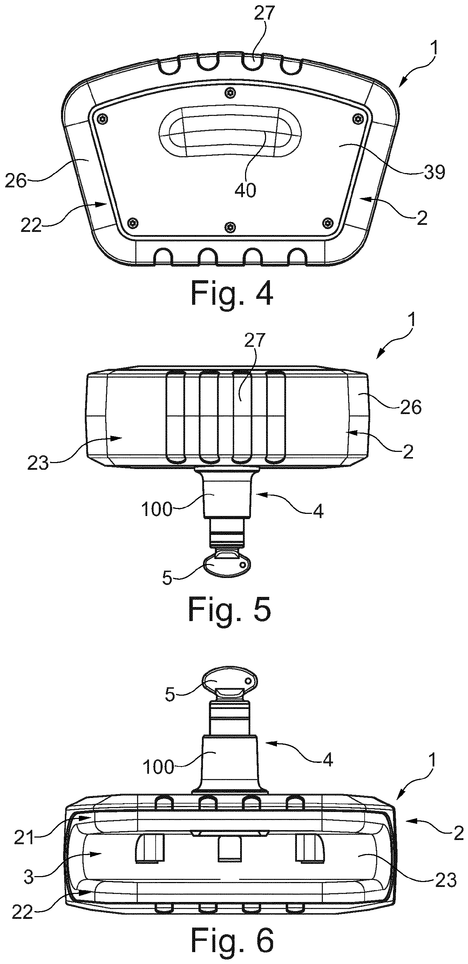

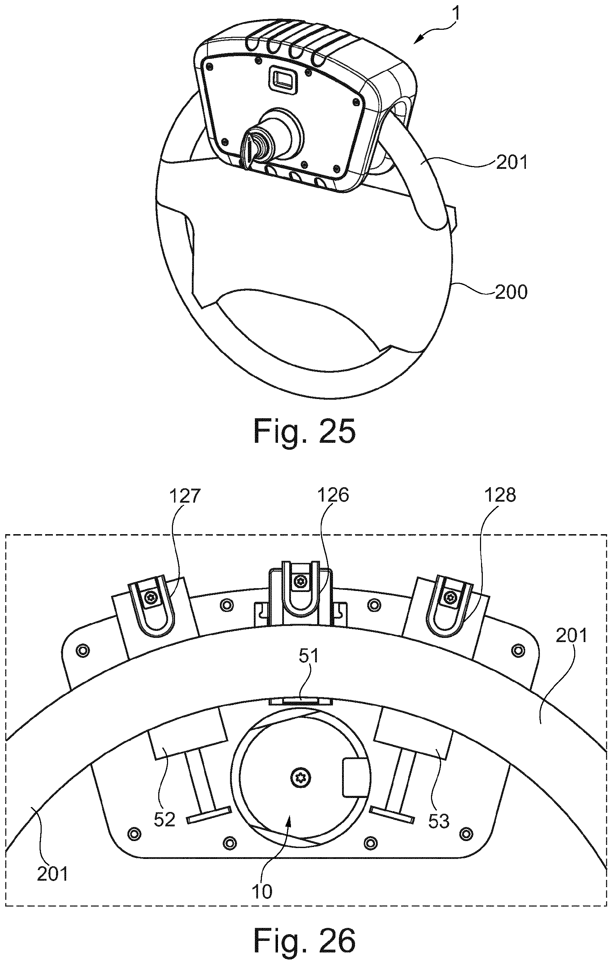

Figures 1 to 6 show a steering wheel lock 1 according to the present disclosure in a dismounted state when it is not mounted to a steering wheel 200. Figure 25 shows the steering wheel lock 1 in a mounted state in which it is locked onto a steering wheel 200.

The steering wheel lock 1 comprises a body 2 defining a cavity 3 for receiving a rim 201 of a steering wheel 200, a locking mechanism 4, and a key 5.

The locking mechanism 4 is configured such that in the dismounted state the key 5 is trapped in the locking mechanism 4 as shown in Figure 1 so as to remain connected to the steering wheel lock 1 while the steering wheel lock 1 is not mounted to a steering wheel 200.

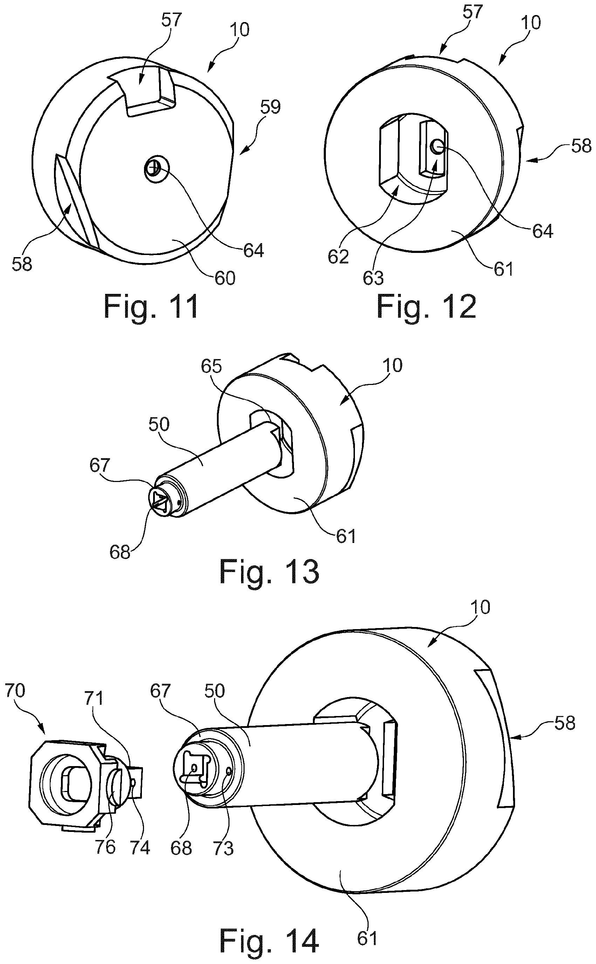

The locking mechanism 4 comprises a locking member 10 (Figures 11 and 12) movable between an unlocked position in which the locking member 10 is retracted out of the cavity 3 sufficiently to allow introduction of the rim 201 of the steering wheel 200 into the cavity 3, and a locked position in which the locking member 10 projects across the cavity 3 sufficiently to prevent withdrawal of said rim 201 of said steering wheel 200 out of the cavity 3.

The body 2 may comprise a first wall 21, a second wall 22 and a roof 23 joining the first wall 21 to the second wall 22. The cavity 3 may be defined between the first wall 21 and the second wall 22. The cavity 3 may comprise an open mouth 6 defined by the body 2 through which the rim 201 of the steering wheel 200 can pass during slidable mounting and dismounting of the steering wheel lock 1. The open mouth 6 may be arranged opposite the roof 23.

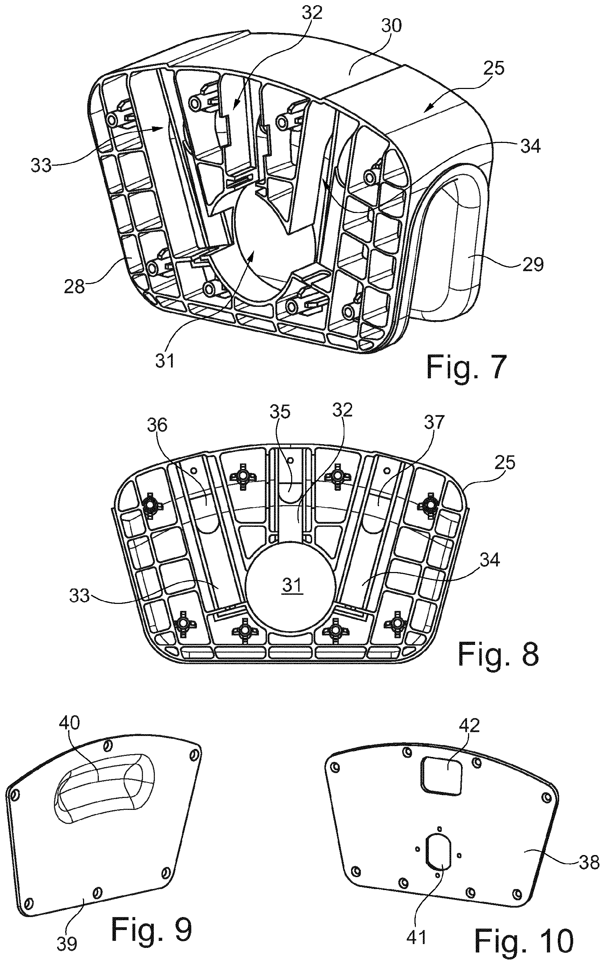

The body 2 may comprise a chassis that forms the first wall, the second wall and the roof. The chassis may comprise a chassis core 25 (Figure 7 and 8) which may be covered in part by a chassis cover 26. The chassis cover 26 may form a protective cover. The chassis cover 26 may be formed from a resilient material, for example an elastomer. The chassis cover 26 may comprise grooves 27 on one or more faces to aid manual handling of the steering wheel lock 1. The chassis cover 26 may be a bright colour, for example red or yellow, to increase the visibility of the steering wheel lock 1 to a user and provide a visual warning effect.

The chassis core 25 may comprise a first wall part 28, a second wall part 29 and a roof part 30 joining the first wall part 28 to the second wall part 29.

The first wall part 28 of the chassis core 25 may comprise a round aperture 31 and three channels 32-34. The three channels 32-24 may be linear channels. There may be a central channel 32 and two side channels 33, 34. A lower end of each channel 32-34 may interface with the round aperture 31.

The chassis core 25 may further comprise three trigger apertures 35-37 (Figure 8), each located at an upper end of one of the channels 32-24. The trigger apertures 35-37 may extend from the first wall part 28 into the roof part 30.

A front plate 38 (Figure 10) and a rear plate 39 (Figure 9) may be fixed to the chassis core 25, for example by bolts.

The rear plate 39 may comprise a grip recess 40 for easing manual handling of the steering wheel lock 1.

The front plate 38 may comprise a first aperture 41 and a second aperture 42.

The first aperture 41 may have a non-circular shape. For example, the first aperture 41 may have a rectangular, or oval or similar shape. In the illustrated example the first aperture 41 has a generally rectangular shape with first and second opposed edges that are straight and third and fourth opposed edges that are rounded, optionally arc shaped, optionally having a fixed radius of curvature.

The second aperture 42 may form a window in the front plate 38. The second aperture 42 may be a wide variety of shapes. In the illustrated example, the second aperture 42 is generally rectangular in shape.

The locking mechanism may comprise, in addition to the locking member 10, a central shaft 50, one or more detents 51-53 and one or more triggers.

The locking member 10 may be configured to be movable axially and rotationally. Axial movement may move the locking member 10 between the locked position and the unlocked position. Rotational movement of the locking member 10 may be used to maintain the locking member 10 in its locked position.

The locking member 10 may comprise a boss 10 (Figure 11 and 12) that may comprise one or more recesses 57-59 for receiving the one or more detents 51-53. The one or more recesses 57-59 may be provided in a rear face 60 of the boss 10. The boss 10 may be generally round in external shape. In the illustrated example three recesses 57-59 and three detents 51-53 are provided. A first recess 57 may comprise a notch in a periphery of the boss 10. The notch may be rectangular in shape. A second recess 58 and a third recess 59 may comprise flats on the periphery of the boss 10. The three recesses 57-59 may only extend partly through the thickness of the boss 10 from the rear face 60. In the unlocked position the first recess 57 may be located at the top of the boss 10 (12 o'clock position) and the second and third recesses 58, 59 may be located at the 4 o'clock and 8 o'clock positions.

A front face 61 of the boss 10 may be provided with a bore that passes part way through the thickness of the boss 10 from the front face 61 towards the rear face 60. A front section 62 of the bore may have a non-circular shape. For example, the front section 62 may have a rectangular, or oval or similar shape. In the illustrated example front section 62 of the bore has a generally rectangular shape with first and second opposed edges that are straight and third and fourth opposed edges that are rounded, optionally arc shaped, optionally having a fixed radius of curvature. The front section of the bore may have the same shape and may have the same or similar size as the first aperture 41 of the front plate 38. A rear section 63 of the bore may have a keyed recess having a smaller rectangular shape provided with a through hole 64 that passes through to the rear face 60 of the boss 10.

The central shaft 50 (Figure 13) may comprise a rear end 65 that has a key 66 (e.g. a rectangular projection) shaped to mate with the keyed recess of the rear section 63 of the bore of boss 10 and a threaded hole. A front end 67 of the central shaft 50 may comprise a square shaped bore 68. The boss 10 may be affixed to the central shaft 10 using a bolt 69 that passes through the through hole 64 of the boss 10 into the threaded hole of the central shaft 50. Engagement of the key 66 in the rear section 63 of the bore ensures that rotation of the central shaft 50 about the longitudinal axis X-X also results in rotation of the boss 10 about the longitudinal axis X-X.

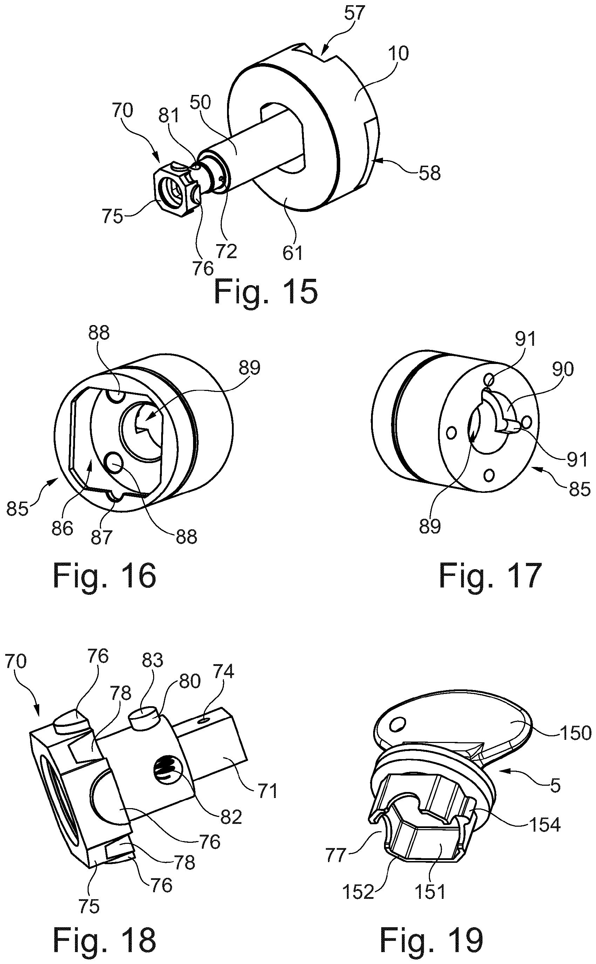

The central shaft 50 may have attached to it a head piece 70 (Figures 14 and 18) that may have a rear spigot 71 having a square shape sized to be received in the square shaped bore 68 of the central shaft 50. A fixing pin 72 may be passed through a lateral hole 73 in the central shaft 50 and a corresponding lateral hole 74 in the rear spigot 71 to longitudinally fix the two parts together (Figure 15). Engagement of the rear spigot 71 of the head piece 70 in the square shaped bore 68 of the central shaft 50 ensures that rotation of the head piece 70 about the longitudinal axis X-X also results in rotation of the central shaft 50 about the longitudinal axis X-X.

A front end 75 of the head piece 70 may be enlarged and may comprise one or more lateral projections 76 that are shaped to mate with corresponding recesses 77 in the key 5. In the illustrated example, three lateral projections 76 are provided, each being semi-circular in shape. The head piece 70 may also comprise four recesses 78, one on each corner that face rearwardly for receipt of a spring bias.

A shaft 79 (Figure 18) of the head piece 70 may be provided with a sprung piston that may comprise a piston 80 slidably received in a lateral bore 81 of the shaft and a spring 82 that biases the piston 80 outwardly. An end face 83 of the piston 80 may be domed.

On assembly, the head piece 70 may be slidably received in a cylinder 85 (Figure 16 and 17). A front end of the cylinder 85 may comprise an opening 86 sized and shaped to receive the key 5. In the illustrated example the opening 86 is square with truncated corners. A keying recess 87 may be provided on one edge of the opening. An interior of the cylinder may be provided with four closed-ended bores 88 spaced around a central open-ended bore 89. A rear race of the cylinder 85 may comprise a raceway 90 for receipt of the piston 80 of the head piece 70 and this may extend through 90°. A radial extension 91 of the raceway 90 may be provided at each end of the raceway 90. The angular extent of the raceway 90 may be changed dependent on the desired angular rotation of the key 5 in use, e.g. 90°, or 120° for example.

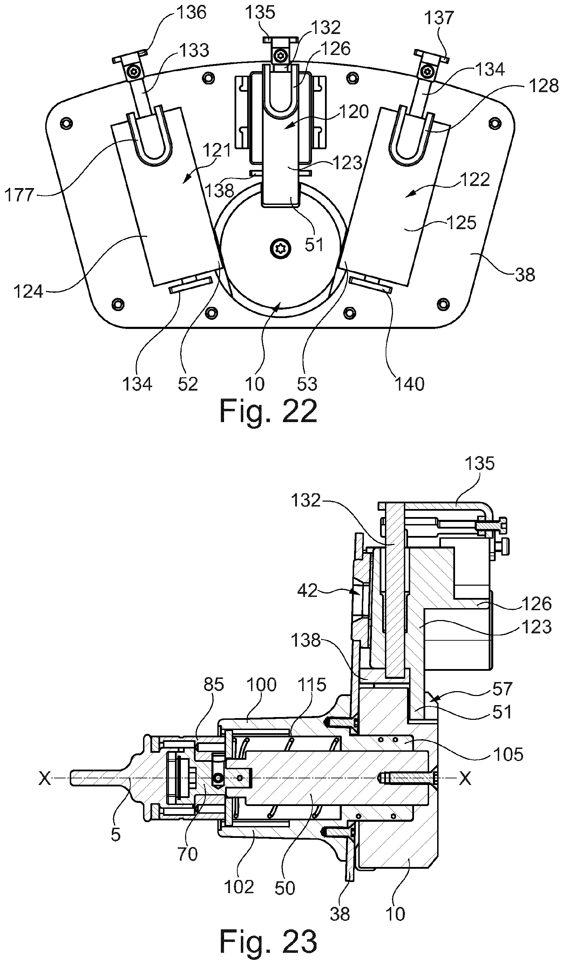

The cylinder 85, head piece 70, central shaft 50 and boss 10 may be mounted to the body 2, for example to the front plate 38, by means of a hollow member 100 (Figure 23, 24, 27). The hollow member 100 may be fixed to the front plate 38 by bolts that pass from a rear of the front plate 38 into threaded holes provided in a flange 101 of the hollow member 100. A front end of the hollow member may comprise an elongate tubular section 102 defining a central bore 103. The central bore 103 may be generally round in shape but additionally may comprise two longitudinal channels 104, for example in opposition to each other, that extend part way along the central bore 103 from a front face of the hollow member 100. A rear end of the hollow member may be provided with an extension 105 through which the central bore 103 continues. An external shape of the extension 105 may match that of the first aperture 41 of the front plate 38 but be of a size that is somewhat smaller so as to allow the extension 105 to pass through the first aperture 38 when suitably aligned therewith.

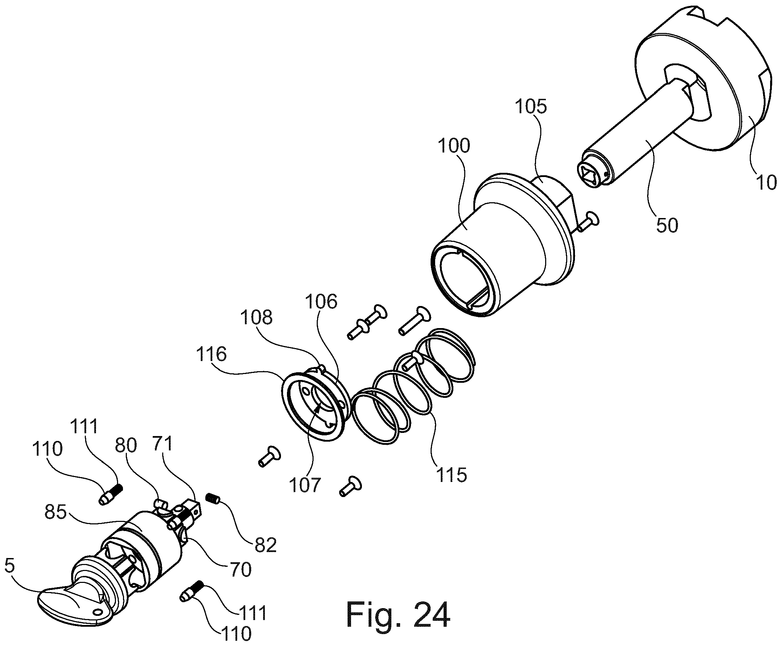

An alignment plate 106 (Figure 24) may be provided that may comprise a central aperture 107 and two opposed lugs 108 that extend radially outwards from a periphery. The lugs 108 may be sized and shaped to be received slidingly in the longitudinal channels 104 of the hollow member 100.

On assembly, the hollow member 100 may be bolted to the front plate 38. The head piece 70 may be inserted into the cylinder 85 from the front so that the rear spigot 71 passes out of the rear of the cylinder 85 and the piston 80 is received in the raceway 90. In addition four spring pins (comprising a pin 110 and associated spring 111) may be captured to extend between the closed ended bores 88 of the cylinder 85 and the four recesses 78 of the head piece 70 so as to bias the head piece 70 forwardly within the cylinder 85 (Figure 23).

The central shaft 50 may then be coupled to the head piece 70 with the rear spigot 71 being received in the square shaped bore 68 of the front end 67 of the central shaft 50 and the parts fixed by insertion of the fixing locating pin 72 in the lateral holes 73, 74. The alignment plate 106 may be fixed to the rear face of the cylinder 85 for example using bolts. The assembly may then be inserted into the hollow member 100 together with a spring 115 that extends from a base of the central bore 103 of the hollow member 100 to a rear of the alignment plate 106 so as to bias the assembly of the cylinder 85 and alignment plate 106 forwardly within the hollow member 100.

The boss 10 may then be bolted to the rear end of the central shaft 50 so that the boss 10 is located to a rear of the front plate 38.

A fascia ring 116 (Figure 24) may be mounted to the front of the hollow member 100 surrounding the cylinder 85.

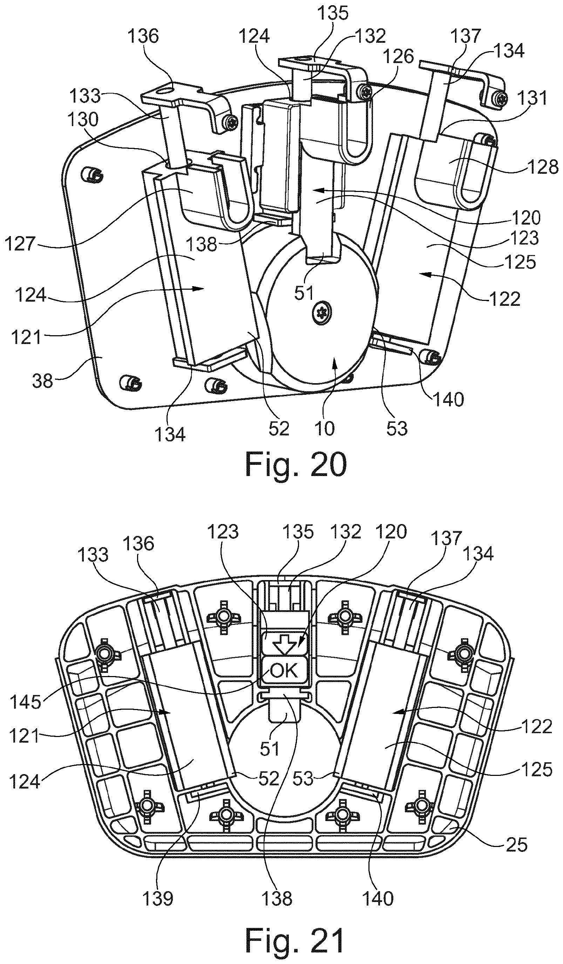

The locking mechanism may further comprise one or more slidable members 120-122 (Figures 20-22). In the illustrated example there are three slidable members 120-122. Each slidable member 120-122 may comprise an elongate body 123-125 having a lateral leg 126-128 at its upper end. The elongate body 123-125 may comprise a bore 129-131 that extends along its length. A mounting structure may be provided for mounting each slidable member 120-122 to the body 2, in particular the chassis core 25. For each slidable member 120-122, a mounting rod 132-134, an upper mounting plate 135-137 and a lower mounting plate 138-140 may be provided. The upper and lower mounting plates 135-137, 138-140 may be bolted to the chassis core 25 with the mounting rod 132-134 extending between them. The slidable member 120-122 may be mounted on the mounting rod 132-134 so as to be slidably received within the linear channel 32-34 of the chassis core 25. A spring may be provided for each slidable member 120-122 to bias the slidable member 120-122 downwardly towards its lower mounting plate 138-140.

The central slidable member 120 may be provided, on a front face thereof, with a visual indication. In the illustrated example the visual indication takes the form of a pictograph 145 of an arrow on a red background and the word 'OK' on a green background.

Each slidable member 120-122 may comprise (or provide the function of) a trigger at an upper end and a detent 51-53 at a lower end. The lateral leg 126-128 may form the trigger. The lateral leg 126-128 on assembly may project through one of the trigger apertures 35-37 of the chassis core 25 so that it may be contacted in use by the rim 201 of the steering wheel 200. The lower face of the lateral legs 126-128 may be rounded and may define contact points. The contact points of the triggers that in use are contacted by the rim 201 of the steering wheel 200 may be arranged along an arc, optionally along a circular path so that the triggers may be contacted and actuated at the same time by the circular rim 201 of the steering wheel 200. This may also to help prevent all the triggers being simultaneously actuated by a straight bar or similar object being inserted into the cavity 3.

The contact points of the triggers that in use are contacted by the rim 201 of the steering wheel 200 may be arranged in one plane that is parallel to a plane of the cavity 3 (Figures 20 and 26). Alternatively, the contact points may be arranged in more than one plane that are each parallel to a plane of the cavity 3. In other words, one or more of the contact points may be offset towards or away from the front wall 21 /rear wall 22 compared to other contact point(s) of the triggers. For example, different contact points may extend across different portions of the roof 23. In this way, it may be beneficially made more likely that the triggers can only all be actuated by the rim 201 of the steering wheel 200 that has a sufficient thickness to make contact with all of the contact points as opposed to a narrower element that might be inserted into the cavity 3.

Each detent 51-53 may be formed by a portion of the slidable member 120-122 that can interface with and foul movement of the locking member, e.g. the boss 10 (Figure 20). For example a lower end or lower corner of the slidable member 51-53 may function as a detent by interfacing with the three recesses 57-59 of the boss 10.

The detents 51-53 of the locking mechanism are configured to be movable between an engaged position (Figures 10 and 22) in which they engage the boss 10 to prevent axial and/or rotational movement of the boss 10, and a disengaged position (Figure 26) in which they are disengaged from the boss 10 to permit axial and rotational movement of the boss 10.

Each slidable member 120-122 may be a unitary body such that its trigger and detent 51-53 are integrally formed.

The key 5 may comprise a handle 150 and a body 151 (Figure 19), the body 151 may be hollow and in the illustrated example has a square shape with truncated corners. A leading edge 152 of the body 151 may comprise the recesses 77 that are of a number and shape to match the lateral projections 76 of the intended head piece 70 (Figure 18). A restraining lug 154 may be provided on one face of the body 151 that corresponds to the keying recess 87 in the front face of the cylinder 85.

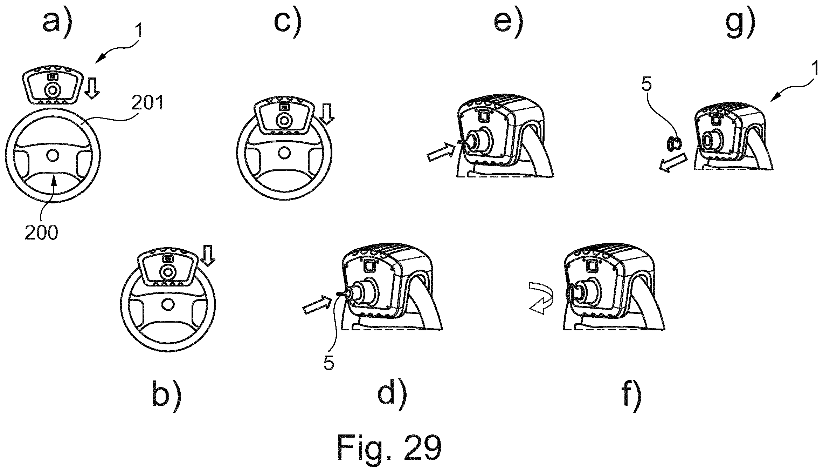

Operation of the steering wheel lock 1 will now be described starting from a position where the steering wheel lock 1 is dismounted from a steering wheel 200 and the key 5 is trapped in the cylinder 85 (Figure 29 a)). In this dismounted state the key 5 cannot be rotated due to the fouling of the boss 10 by the detents 51-53 which in turn prevents rotation of the central shaft 50 and the head piece 70, which in turn prevents rotation of the key 5 by the engagement of the lateral projections 76 with the recesses 77 of the key 5. Further the key 5 remains trapped and cannot be detached from the cylinder 85 since the restraining lug 154 of the key 5 is out of alignment with the keying recess 87 in the front face of the cylinder 85. In this state, the visual indication in the window 42 may show the red pictogram of a downwardly pointing arrow to provide a visual indication to the user that the steering wheel lock 1 may be mounted onto the rim 201 of a steering wheel 200 by sliding the steering wheel lock 1 down onto said rim 201 (Figure 1).

As the steering wheel lock 1 is slid onto the rim 201 (Figure 29 b) and c)), the rim 201 is received through the open mouth 6 of the cavity 3 and the rim 201 then makes contact with the triggers, in the form of the lateral legs 126-128 of the slidable members 120-122. Movement of the steering wheel lock 1 into its mounted state displaces the triggers into a triggered state (Figure 26 - which for clarity shows a gap between the rim 201 and the lateral legs 126-128 which may not be present in practice) thereby causing the one or more detents 51-53 to be moved into their disengaged position by the slidable members 120-122 being displaced upwardly within their channels 32-34.

Preferably all of the triggers must be displaced into their triggered state in order to move all of the detents 51-53 into their disengaged position to permit axial and rotational movement of the boss 10.

At this point (Figure 29 d)) the visual indication in the window 42 may show the green word `OK' to provide a visual indication to the user that the key 5 may now be operated.

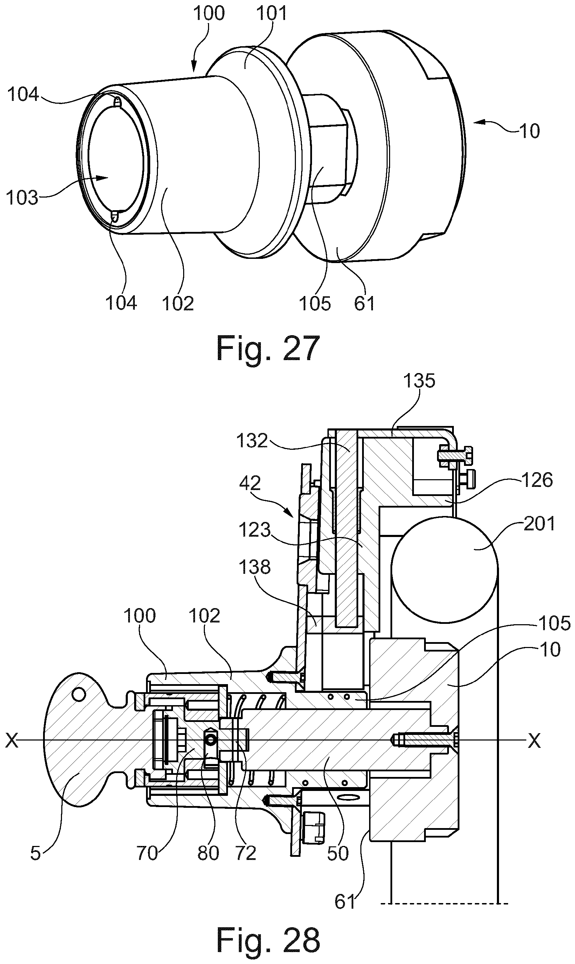

The key 5 may then be pushed inwards (Figure 29 e)). Inward movement of the key 5 displaces the cylinder 85 and alignment plate 106 within the hollow member 100 to compress the spring 115. At the same time the inward pushing of the key 5 causes the head piece 70, the central shaft 50 and the boss 10 to be moved inwards so that the boss 10 projects at least part way across the cavity 3 so that the rim 201 of the steering wheel 200 is sandwiched between the lateral legs 126-128 of the triggers and the boss 10. In addition the boss 10 is moved so that its front face 61 is moved rearwardly of the extension 105 of the hollow member 100 freeing the boss 10 to be rotated (Figure 28).

Inward movement of the key 5 may (dependent on the correct coding of the recesses 77 relative to the projections 76) also compress the pins 110 against their associated springs 111. Once the pins 110 are fully compressed rotation of the key 5 may be permitted.
a pin 110 and associated spring 111) may be captured to extend between the closed ended bores 88 of the cylinder 85 and the four recesses 78 of the head piece 70 so as to bias the head piece 70 forwardly within the cylinder 85

The key 5 is then rotated through 90° (Figure 29 f)) to rotate the boss 10 to move the extension 105 out of alignment with the front section 62 of the bore which prevents the boss 10 moving back outwards. Rotation of the key 5 moves the piston 80 from one radial extension 91 along the raceway 90 to the other radial extension 91. Movement of the sprung piston 80 into and out of each radial extension 91 provides a tactile force to be experienced by the user providing feedback that the key 5 has been fully rotated between its end stops.

Rotation of the key 5 also frees the key 5 from the cylinder 85 by aligning the restraining lug 154 with the keying recess 87 so that the key 5 can be removed from the locking mechanism (Figure 29 g)) and then used to operate another device.

To remove the steering wheel lock 1 from the rim 201 the above procedure is reversed.

Thus, beneficially, the locking mechanism may be configured such that removal of the key 5 from the locking mechanism requires rotation of the locking member (e.g. boss 10), which in turn requires the locking member to be in its locked position, which in turn requires the one or more detents 51-53 to be in their disengaged position, which in turn requires the one or more triggers (e.g. lateral legs 126-128) to have been engaged by the rim 201 of the steering wheel 200, which in turn requires the steering wheel lock 1 to be in its mounted state.

The steering wheel lock 1 may form a part of a trapped key system which may also comprise an enabling device for selectively enabling and disabling use of another item, for example a loading bay. The enabling device may be operable by the key of the steering wheel lock 1 so that it may only be operated while the key5 is removed from the steering wheel lock 1 which in turn requires the steering wheel lock 1 to be mounted to the steering wheel 200.

The enabling device may prevent removal of the key 5 from the enabling device until the enabling device is operated to disable use of the item, for example the loading bay. The enabling device may comprise an electrical switch and/or a door lock, for example an electrical switch providing power to a door or ramp or lift of the loading bay or a door lock that locks out operation of a door or ramp of the loading bay.

An example use of the trapped key system may comprise:
1) a vehicle arriving at a loading bay and suitably positions the vehicle for unloading/loading;
2) a driver of the vehicle dismounts from the vehicle and obtains the steering wheel lock 1, e.g. from a loading bay operative;
3) the driver then mounts the steering wheel lock 1 to the steering wheel 200 of the vehicle and operates the locking mechanism to remove the key 5. The steering wheel lock 1 is now trapped to the steering wheel 200.
4) the driver or the loading bay operative then inserts the key 5 into the enabling device, for example a power unit supplying power to a shutter door of the loading bay. Power is supplied and the shutter door is raised to permit loading/unloading.
5) When loading/unloading has been completed the shutter door is closed and power is disabled by removing the key 5 from the power unit. The key 5 is then returned to the driver to allow them to remove the steering wheel lock 1 from steering wheel 200.

Further aspects of the present disclosure are set out in the following clauses:
Clause 1. A steering wheel lock movable between a dismounted state, in which the steering wheel lock is separated from a steering wheel, and a mounted state, in which the steering wheel lock is locked onto a steering wheel;
   the steering wheel lock comprising a body defining a cavity for receiving a rim of a steering wheel, a locking mechanism, and a key;
   the locking mechanism configured such that in the dismounted state the key is trapped in the locking mechanism so as to remain connected to the steering wheel lock while the steering wheel lock is not mounted to a steering wheel, and in the mounted state the key is separable from the locking mechanism and the steering wheel lock;
   the locking mechanism further comprising a locking member movable between:
      i) an unlocked position in which the locking member is retracted out of the cavity sufficiently to allow introduction of a rim of a steering wheel into the cavity; and
      ii) a locked position in which the locking member projects across the cavity sufficiently to prevent withdrawal of said rim of said steering wheel out of the cavity.
Clause 2. The steering wheel lock of clause 1, wherein the steering wheel lock is configured to be mounted onto a rim of a steering wheel by sliding the steering wheel lock down onto said rim.
Clause 3. The steering wheel lock of clause 1 or clause 2, wherein the cavity comprises an open mouth defined by the body through which a rim of a steering wheel can pass during slidable mounting and dismounting of the steering wheel lock.
Clause 4. The steering wheel lock of clause 3, wherein the body comprises a first wall, a second wall and a roof joining the first wall to the second wall; the cavity being defined between the first wall and the second wall with the open mouth being arranged opposite the roof.
Clause 5. The steering wheel lock of any preceding clause, wherein the locking member is configured to be movable axially and rotationally, axial movement moving the locking member between the locked position and the unlocked position.
Clause 6. The steering wheel lock of any preceding clause, the locking mechanism further comprising one or more detents that are configured to be movable between:
   an engaged position in which the one or more detents engage the locking member to prevent axial and/or rotational movement of the locking member; and
   a disengaged position in which the one or more detents are disengaged from the locking member to permit axial and rotational movement of the locking member.
Clause 7. The steering wheel lock of clause 6, wherein the locking member comprises a boss comprising one or more recesses for receiving the one or more detents.
Clause 8. The steering wheel lock of clause 6 or clause 7, wherein the locking mechanism further comprises one or more triggers that are coupled to or integrally formed with the one or more detents, the one or more triggers in a rest state projecting into the cavity in the dismounted state of the steering wheel lock when the one or more detents are in their engaged position.
Clause 9. The steering wheel lock of clause 8, wherein the one or more triggers are configured to be contacted by a rim of a steering wheel on movement of the steering wheel lock into the mounted state so as to displace the triggers into a triggered state thereby causing the one or more detents to be moved into their disengaged position.
Clause 10. The steering wheel lock of any one of clauses 6 to 9, wherein the locking mechanism comprises a plurality of triggers and a plurality of detents and the locking mechanism is configured such that all of the triggers must be displaced into their triggered state in order to move all of the detents into their disengaged position to permit axial and rotational movement of the locking member.
Clause 11. The steering wheel lock of any one of clauses 8 to 10, wherein the one or more triggers are located at or towards a roof of the cavity opposite the mouth of the cavity.
Clause 12. The steering wheel lock of any one of clauses 8 to 11, wherein in the mounted state a rim of a steering wheel can be sandwiched between the one or more triggers and the locking member.
Clause 13. The steering wheel lock of any one of clauses 8 to 12, comprising two triggers, optionally three or more triggers, the triggers being arranged along the roof of the cavity.
Clause 14. The steering wheel lock of any one of clauses 8 to 13, wherein contact points of the triggers that in use are contacted by a rim of a steering wheel are arranged along an arc, optionally along a circular path.
Clause 15. The steering wheel lock of any one of clauses 8 to 14, wherein contact points of the triggers that in use are contacted by a rim of a steering wheel are arranged in one plane that is parallel to a plane of the cavity, or are arranged in more than one plane that are each parallel to a plane of the cavity.
Clause 16. The steering wheel lock of any one of clauses 8 to 15, wherein the one or more triggers are each biased into their rest state so that the one or more detents are biased into their engaged position.
Clause 17. The steering wheel lock of any one of clauses 8 to 16, wherein the locking mechanism comprises one or more slidable members, each slidable member comprising one of the triggers at one end and one of the detents at a second end.
Clause 18. The steering wheel lock of clause 17, wherein each slidable member comprises an elongate body housed within the body and a lateral leg forming the trigger that can project through an aperture in the body.
Clause 19. The steering wheel lock of any one of clauses 8 to 18, wherein the locking mechanism is configured such that removal of the key from the locking mechanism requires rotation of the locking member, which in turn requires the locking member to be in its locked position, which in turn requires the one or more detents to be in their disengaged position, which in turn requires the one or more triggers to have been engaged by a rim of a steering wheel, which in turn requires the steering wheel lock to be in its mounted state.
Clause 20. The steering wheel lock of any preceding clause, wherein the locking mechanism is configured such that rotational movement of the locking member requires the key to be inserted in the locking mechanism.
Clause 21. The steering wheel lock of any preceding clause, wherein the locking mechanism comprises a key barrel configured to receive the key, the key barrel being coupled to the locking member.
Clause 22. The steering wheel lock of any preceding clause, further comprising a visual indicator for alerting a user when the steering wheel lock is in its mounted state.
Clause 23. The steering wheel lock of clause 22 when dependent on clause 17 or clause 18, wherein the visual indicator comprises a window in the body and one or more visible indications on one of the slidable members that can be selectively viewed through the window.
Clause 24. A trapped key system comprising:
   the steering wheel lock of any preceding clause; and
   an enabling device for selectively enabling and disabling use of a loading bay, the enabling device being operable by the key of the steering wheel lock.
Clause 25. The trapped key system of clause 24, wherein the enabling device prevents removal of the key from the enabling device until the enabling device is operated to disable use of the loading bay.
Clause 26. The trapped key system of clause 24 or clause 25, wherein the enabling device comprises an electrical switch and/or a door lock.
Clause 27. A method of preventing a vehicle from being driven away from a loading bay during loading/unloading, comprising the sequential steps of:
   applying to a steering wheel of a vehicle at a loading bay the steering wheel of any one of clauses 1 to 23 which prevents the vehicle from being driven away from the loading bay,
   locking the steering wheel lock to prevent removal of the steering wheel lock, by means of the key which is prevented from being removed from the steering wheel lock until the steering wheel lock is applied and locked to a rim of the steering wheel;
   removing the key from the locked steering wheel lock; and
   using the key in an enabling device to enable use of the loading bay and simultaneously trapping the key in the enabling device so that it cannot be used to unlock the steering wheel lock until the key is used to disable use of the loading bay.

## Claims

1. A steering wheel lock movable between a dismounted state, in which the steering wheel lock is separated from a steering wheel, and a mounted state, in which the steering wheel lock is locked onto a steering wheel;
the steering wheel lock comprising a body defining a cavity for receiving a rim of a steering wheel, a locking mechanism, and a key;
the locking mechanism configured such that in the dismounted state the key is trapped in the locking mechanism so as to remain connected to the steering wheel lock while the steering wheel lock is not mounted to a steering wheel, and in the mounted state the key is separable from the locking mechanism and the steering wheel lock;
the locking mechanism further comprising a locking member movable between:
i) an unlocked position in which the locking member is retracted out of the cavity sufficiently to allow introduction of a rim of a steering wheel into the cavity; and
ii) a locked position in which the locking member projects across the cavity sufficiently to prevent withdrawal of said rim of said steering wheel out of the cavity.

2. The steering wheel lock of claim 1, wherein the cavity comprises an open mouth defined by the body through which a rim of a steering wheel can pass during slidable mounting and dismounting of the steering wheel lock; and optionally wherein the body comprises a first wall, a second wall and a roof joining the first wall to the second wall; the cavity being defined between the first wall and the second wall with the open mouth being arranged opposite the roof.

3. The steering wheel lock of any preceding claim, wherein the locking member is configured to be movable axially and rotationally, axial movement moving the locking member between the locked position and the unlocked position.

4. The steering wheel lock of any preceding claim, the locking mechanism further comprising one or more detents that are configured to be movable between:
an engaged position in which the one or more detents engage the locking member to prevent axial and/or rotational movement of the locking member; and
a disengaged position in which the one or more detents are disengaged from the locking member to permit axial and rotational movement of the locking member.

5. The steering wheel lock of claim 4, wherein the locking member comprises a boss comprising one or more recesses for receiving the one or more detents.

6. The steering wheel lock of claim 4 or claim 5, wherein the locking mechanism further comprises one or more triggers that are coupled to or integrally formed with the one or more detents, the one or more triggers in a rest state projecting into the cavity in the dismounted state of the steering wheel lock when the one or more detents are in their engaged position; and optionally wherein the one or more triggers are configured to be contacted by a rim of a steering wheel on movement of the steering wheel lock into the mounted state so as to displace the triggers into a triggered state thereby causing the one or more detents to be moved into their disengaged position.

7. The steering wheel lock of any one of claims 4 to 6, wherein the locking mechanism comprises a plurality of triggers and a plurality of detents and the locking mechanism is configured such that all of the triggers must be displaced into their triggered state in order to move all of the detents into their disengaged position to permit axial and rotational movement of the locking member.

8. The steering wheel lock of any one of claims 6 to 7, wherein in the mounted state a rim of a steering wheel can be sandwiched between the one or more triggers and the locking member.

9. The steering wheel lock of any one of claims 6 to 8, comprising two triggers, optionally three or more triggers, the triggers being arranged along the roof of the cavity.

10. The steering wheel lock of any one of claims 6 to 9, wherein contact points of the triggers that in use are contacted by a rim of a steering wheel are arranged along an arc, optionally along a circular path.

11. The steering wheel lock of any one of claims 6 to 10 wherein contact points of the triggers that in use are contacted by a rim of a steering wheel are arranged in one plane that is parallel to a plane of the cavity, or are arranged in more than one plane that are each parallel to a plane of the cavity.

12. The steering wheel lock of any one of claims 6 to 11, wherein the locking mechanism comprises one or more slidable members, each slidable member comprising one of the triggers at one end and one of the detents at a second end; and optionally wherein each slidable member comprises an elongate body housed within the body and a lateral leg forming the trigger that can project through an aperture in the body.

13. The steering wheel lock of any one of claims 6 to 12, wherein the locking mechanism is configured such that removal of the key from the locking mechanism requires rotation of the locking member, which in turn requires the locking member to be in its locked position, which in turn requires the one or more detents to be in their disengaged position, which in turn requires the one or more triggers to have been engaged by a rim of a steering wheel, which in turn requires the steering wheel lock to be in its mounted state.

14. A trapped key system comprising:
the steering wheel lock of any preceding claim; and
an enabling device for selectively enabling and disabling use of a loading bay, the enabling device being operable by the key of the steering wheel lock.

15. A method of preventing a vehicle from being driven away from a loading bay during loading/unloading, comprising the sequential steps of:
applying to a steering wheel of a vehicle at a loading bay a steering wheel lock as claimed in any one of claims 1 to 13 which prevents the vehicle from being driven away from the loading bay,
locking the steering wheel lock to prevent removal of the steering wheel lock, by means of the key which is prevented from being removed from the steering wheel lock until the steering wheel lock is applied and locked to a rim of the steering wheel;
removing the key from the locked steering wheel lock; and
using the key in an enabling device to enable use of the loading bay and simultaneously trapping the key in the enabling device so that it cannot be used to unlock the steering wheel lock until the key is used to disable use of the loading bay.
